# EUROPEAN PATENT SPECIFICATION

(11) **EP 2 143 979 B1**
(45) Date of publication and mention of the grant of the patent: **08.02.2012**
(21) Application number: 08425335.0
(22) Date of filing: 13.05.2008
(51) Int. Cl.: F16H 63/20

(54) **Double-clutch gearchange**
Doppelkupplunsgetriebeschaltung
Dispositif de changement de vitesses pour boîte à double embrayages

(43) Date of publication of application: 13.01.2010
(73) Proprietor: Magneti Marelli S.p.A., Corbetta (MI) (IT)
(72) Inventor: Tornatore, Giovanni, 10080 S. Benigno Canavese (IT); Sola, Cesare, 10087 Valperga (IT)
(74) Representative: Bergadano, Mirko

(56) References cited:
- WO-A-2007/065611
- DE-A1- 4 115 675
- DE-A1- 10 108 881
- DE-A1- 19 920 064
- FR-A- 2 089 271
- FR-A- 2 848 629
- JP-A- 7 332 490

## Description

### TECHNICAL FIELD

The present invention relates to a double-clutch gearchange.

### BACKGROUND ART

There is an increasingly widespread use of servo transmissions, which are structurally similar to manual transmissions of a traditional type except for the fact that the clutch pedal and the lever for selection of the gears traditionally operated by the driver are replaced by corresponding electrical or hydraulic servos. Using a servo transmission, the driver only needs to send to a control unit of the transmission the order to passing to a higher gear or else to a lower gear, and the control unit of the transmission autonomously carries out gear change by acting both on the engine and on the servos associated to the clutch and gearchange.

In order to reduce the time necessary for carrying out a gear change and to eliminate the "torque drop" that occurs during gear change as a result of opening of the clutch, servo transmissions have been proposed provided with a double-clutch gearchange. In a double-clutch gearchange, the engine shaft transmits the motion to two coaxial clutches, each of which in turn transmits the motion to a respective primary shaft of the gear change. The two primary shafts of the gear change are coaxial, are set inside one another and are coupled to a common secondary shaft that transmits the motion to the drive wheels by means of respective gear trains, each of which has a transmission ratio of its own and defines a particular gear speed. In order to enable proper operation of the double-clutch gearchange, all the odd gears are coupled to one and the same primary shaft, whilst all the even gears are coupled to the other primary shaft. Typically, each gear train comprises a primary gear wheel fixed to the respective primary shaft and a secondary gear wheel that meshes permanently with the primary gear wheel, is mounted idle on the secondary shaft, and can be rendered fixed with respect to the secondary shaft by means of a synchronizer of its own axially mobile along the secondary shaft.

Normally, each synchronizer is set between two secondary gear wheels and is actuated by a respective fork that displaces axially along the secondary shaft in the two directions for displacing the synchronizer between two limit positions of meshing, in each of which the synchronizer engages a respective secondary gear wheel, and an intermediate idle position, in which the synchronizer does not engage either of the two secondary gear wheels. In addition, each fork is actuated by a finger that is fixed with respect to a control shaft of a gear actuator. Normally, the gear actuator impresses on the control shaft, and hence on the finger fixed with respect to the control shaft, a movement of axial translation for selecting the range of the gears (i.e., for selecting the fork to be actuated) and a movement of rotation for engaging/disengaging the gears (i.e., for displacing the fork to be actuated).

In double-clutch gearchanges currently available on the market, two gear actuators are provided, each of which is associated to a respective primary shaft and hence actuates all and exclusively the forks coupled to its own primary shaft. However, the presence of two distinct gear actuators entails an increase in the number of components and hence an increase in the cost, weight, and overall dimensions, and a higher likelihood of malfunctioning.

DE10108881A1 discloses a dual clutch gearbox according to the preamble of claim 1 having a first gearbox part with first motor clutch, gear input shaft and group of gears, and a second gearbox part with similar devices. A single shift shaft is provided which can be axially displaced and rotated by means of a selection actuator and a shift actuator; the shift shaft and shift rods have coupling elements which are formed and arranged so that the shift shaft can be positively connected to a shift rod of one gearbox part without previously disengaging the previously engaged gear of the other gearbox part.

FR2089271A5 disclose a gearbox having a control shaft mounted so that it can turn about a longitudinal axis and axially slidable along the longitudinal axis; and two sleeves, each of which supports respective fingers. One of the sleeves is fitted idle about the control shaft so as to be able to rotate and translate freely with respect to the control shaft, while the second one is blocked in translation.

### DISCLOSURE OF INVENTION

The aim of the present invention is to provide a double-clutch gearchange that will be free from the drawbacks above described and, in particular, will be easy and inexpensive to produce, as well as being light, compact and reliable.

According to the present invention, a double-clutch gearchange is provided according to what is claimed in the annexed claims.

### BRIEF DESCRIPTION OF THE DRAWINGS

The present invention will now be described with reference to the annexed drawings, which illustrate a non-limiting example of embodiment thereof and in which:
- Figure 1 is a schematic view with parts removed for clarity of a double-clutch gearchange made in accordance with the present invention;
- Figure 2 is a schematic view, partially in cross section and with parts removed for reasons of clarity of a control shaft of a gear actuator of the double-clutch gearchange of Figure 1;
- Figure 3 is a view of a scheme of the gears of the double-clutch gearchange of Figure 1;
- Figure 4 is a schematic view of the movements performed for engaging a first gear I in the double-clutch gearchange of Figure 1;
- Figure 5 is a schematic view of the movements performed for engaging a second gear II in the double-clutch gearchange of Figure 1; and
- Figure 6 is a schematic view of the movements performed for disengaging a first gear I and then engaging a third gear III in the double-clutch gearchange of Figure 1.

### PREFERRED EMBODIMENTS OF THE INVENTION

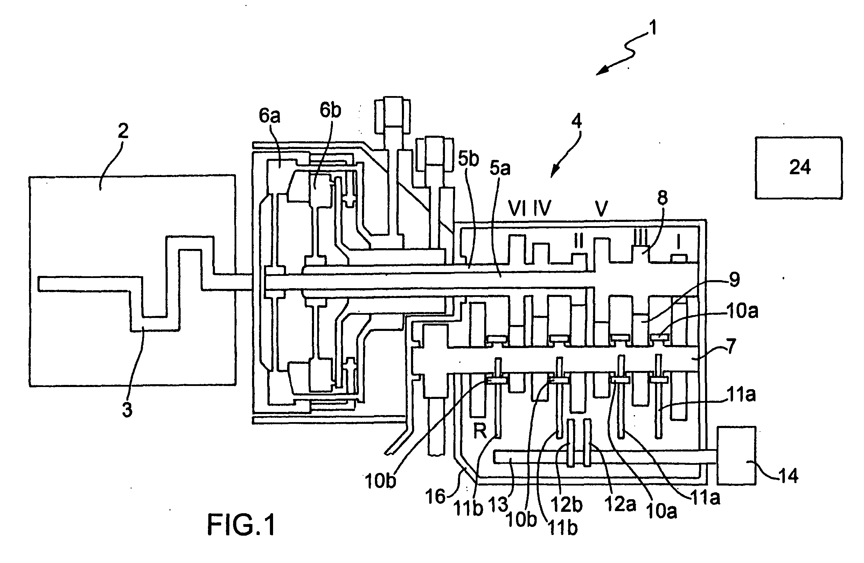

In Figure 1, the reference number 1 designates as a whole a servo transmission for an automobile (not illustrated) driven by an internal-combustion engine 2, which is provided with an engine shaft 3.

The servo transmission 1 comprises a servo double-clutch gearchange 4, which is provided with a pair of primary shafts 5 coaxial to one another, independent of one another, and inserted inside one another. In addition, the double-clutch gearchange 4 comprises two coaxial clutches 6 set in series, each of which is designed to connect a respective primary shaft 5 to the engine shaft 3 of the internal-combustion engine 2. The double-clutch gearchange 4 comprises a single secondary shaft 7 connected to a differential (not illustrated) that transmits the motion to the drive wheels (not illustrated).

The double-clutch gearchange 4 illustrated in the attached figure has six forward gears denoted by roman numbers (first gear I, second gear II, third gear III, fourth gear IV, fifth gear V, and sixth gear VI) and a reverse gear (denoted by the letter R). The primary shaft 5 and the secondary shaft 7 are mechanically coupled to one another by means of a plurality of pairs of gears, each of which defines a respective gear speed and comprises a primary gear wheel 8 mounted on the primary shaft 5 and a secondary gear wheel 9 mounted on the secondary shaft 7. In order to enable proper operation of the double-clutch gearchange 4, all the odd gears (first gear I, third gear III, fifth gear V) are coupled to one and the same primary shaft 5b, whilst all the even gears (second gear II, fourth gear IV, and sixth gear VI) are coupled to the other primary shaft 5a.

Each primary gear wheel 8 is fitted to a respective primary shaft 5 for rotating always in a fixed way with respect to the primary shaft 5 and meshes in a permanent way with the respective secondary gear wheel 9; instead, each secondary gear wheel 9 is mounted idle on the secondary shaft 7. In addition, the double-clutch gearchange 4 comprises four synchronizers 10, each of which is mounted coaxial to the secondary shaft 7, is set between two secondary gear wheels 9, and is designed to be actuated for engaging alternatively the two respective secondary gear wheels 9 to the secondary shaft 7 (i.e., for rendering the two respective secondary gear wheels 9 alternatively angularly fixed with respect to the secondary shaft 7). In other words, each synchronizer 10 can be displaced in one direction to engage a secondary gear wheel 9 to the secondary shaft 7, or else can be displaced in the other direction to engage the other secondary gear wheel 9 to the secondary shaft 7.

Each synchronizer 10 is set between two secondary gear wheels 9 and is actuated by a respective fork 11 that displaces axially along the secondary shaft 7 in the two directions for displacing the synchronizer 10 between two limit positions of engagement, in each of which the synchronizer 10 engages a respective secondary gear wheel 9, and an idle intermediate position, in which the synchronizer 10 does not engage either of the two secondary gear wheels 9. In addition, each fork 11 is actuated by a finger 12 that is moved by a control shaft 13 of a single common gear actuator 14. The gear actuator 14 impresses upon the control shaft 13 a movement of axial translation (i.e., parallel to a longitudinal axis 15 of the control shaft 13) and a movement of rotation about the longitudinal axis 15 of the control shaft 13.

The four forks 11 are divided into two sets, each of which comprises two forks 11 and is actuated by a respective finger 12. In particular, the two forks 11a that control the two synchronizers 10 coupled to the secondary gear wheels 9 that mesh with the primary gear wheels 8 of the primary shaft 5a are actuated by a finger 12a, whilst the two forks 11b that control the two synchronizers 10 coupled to the secondary gear wheels 9 that mesh with the primary gear wheels 8 of the primary shaft 5b are actuated by a finger 12b separate from and independent of the finger 12a.

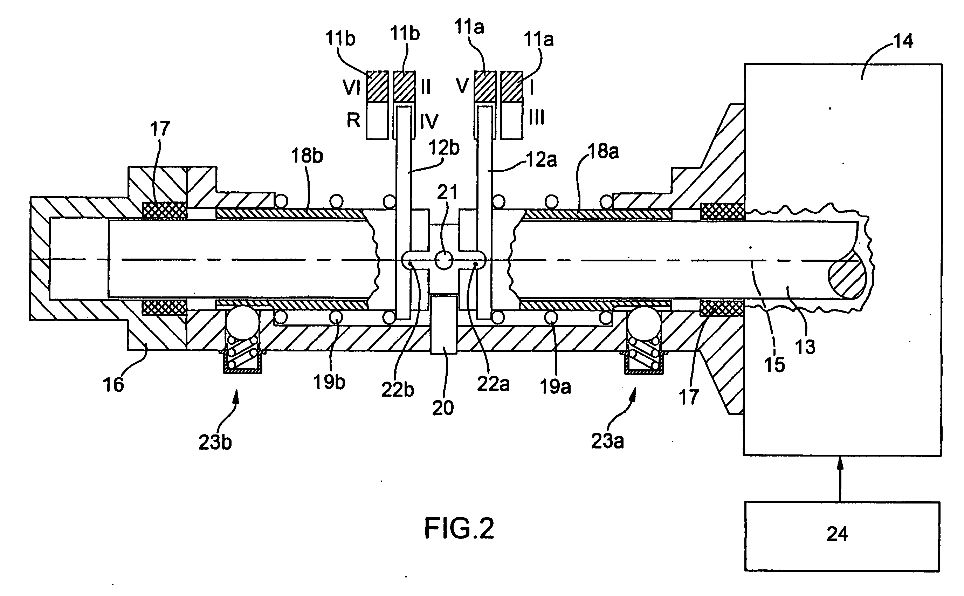

According to what is illustrated in Figure 2, the control shaft 13 is mounted in a rotatable and slidable way by means of a pair of bearings 17 within a fixed box-like frame 16 of the double-clutch gearchange 4. One end of the control shaft 13 comes out of the frame 16 to couple with the gear actuator 14 that is set on the outside of the frame 16.

Each finger 12 is carried by a tubular sleeve 18 fitted idle about the control shaft 13 so as to be able to rotate and translate freely with respect to the control shaft 13. Each sleeve 18 is pushed axially in the direction of the other sleeve 18 by a spring 19 that is set around the sleeve 18 and is compressed between a projection of the frame 16 and a projection of the sleeve 18 (for example, defined by the respective finger 12). The displacement of each sleeve 18 in the direction of the other sleeve 18 under the thrust of the spring 19 is limited by a detent 20, which is fixed to the frame 16 and defines an internal end-of-travel element for both of the sleeves 18. It should be noted that, when a sleeve 18 comes to bear upon the detent 20 that defines the internal end-of-travel element, the respective finger 12 is found to be aligned with a respective internal fork 11 that controls an internal synchronizer 10 (i.e., set inwards) as illustrated in Figure 2. In addition, the moving of each sleeve 18 away from the other sleeve 18 (and hence compressing the spring 19) is limited by the body of the respective bearing 17 that defines an external end-of-travel element for the sleeve 18. It should be noted that, when a sleeve 18 bears upon the body of the respective bearing 17 that defines the external end-of-travel element, the respective finger 12 is found to be aligned with a respective external fork 11 that controls an external synchronizer 10 (i.e., set towards the outside). In a different embodiment (not illustrated), the external end-of-travel elements of the sleeves 18 are not defined by the bearings 17, but by other detents fixed with respect to the frame 16.

In the area comprised between the two sleeves 18, a pin 21 is provided, which is fixed with respect to the control shaft 13, comes out radially (i.e., in a direction perpendicular to the longitudinal axis 15) from the control shaft 13, and is designed to insert alternatively in each coupling slit 22 that is made in each sleeve 18 and reproduces in negative the shape of the pin 21. The ensemble of the pin 21 and the coupling slits 22 constitutes a coupling system, which is designed to render the control shaft 13 alternatively angularly fixed with respect to the sleeves 18. It should be noted that the two sleeves 18 are axially separate from one another so as to define between them a free area. When the pin 21 comes to occupy the free area comprised between the two sleeves 18 (i.e., when the pin 21 is not inserted within a slit), the control shaft 13 is angularly independent of the two sleeves 18 and can hence rotate freely with respect to the two sleeves 18 themselves.

Finally, each sleeve 18 comprises a retention device 23, which is preferably made with the known spring-ball architecture and is designed to maintain the sleeve 18 in the current angular position with a constant and predetermined retention torque. The function of each retention device 23 is to maintain the sleeve 18 in the current angular position preventing random, uncontrolled, and undesirable angular movements of the sleeve 18. Obviously, according to the modalities described in what follows, the control shaft 13 is able to apply to each sleeve 18 a torque that is sufficiently greater than the retention torque generated by the respective retention device 23 for guaranteeing the desired rotation of the sleeve 18.

The servo transmission 1 comprises a control unit 24, which drives the gear actuator 14 for engaging/disengaging the gears, and drives the clutch actuators (not illustrated) that control opening and closing of the two clutches 6.

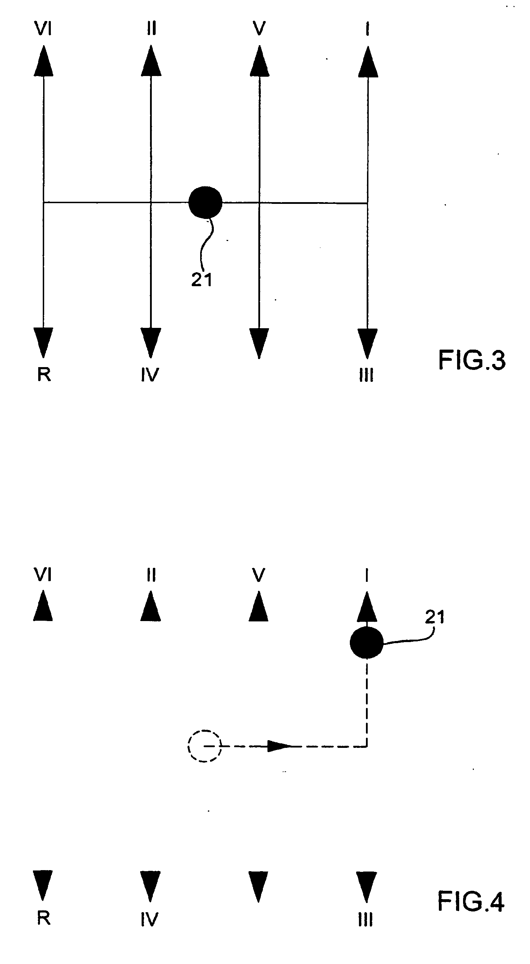

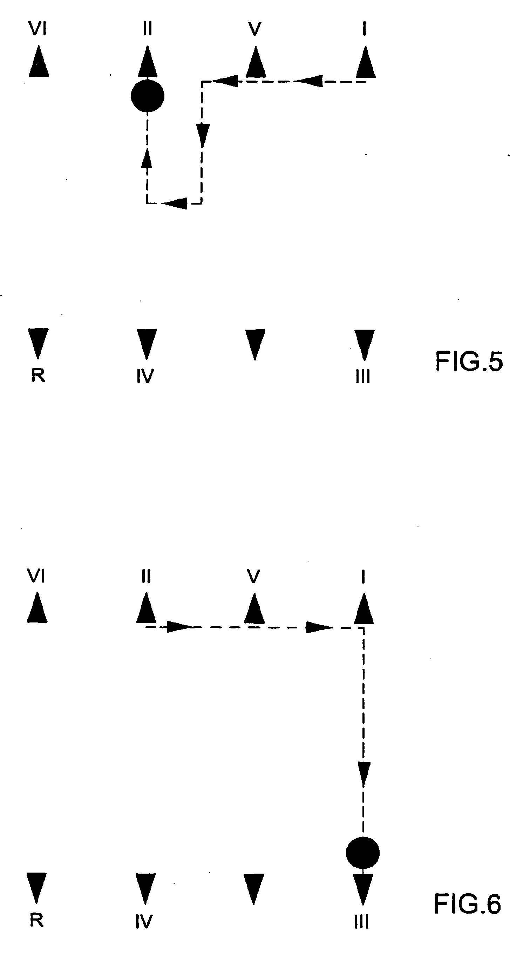

Operation of the double-clutch gearchange 4 is described hereinafter with reference to Figures 2-6. In particular, there follows a description of the modality of engagement of the first gear I starting from an idle condition (Figure 4), the subsequent modality of engagement of the second gear II (Figure 5), and finally the modality of disengagement of the first gear I and subsequent engagement of the third gear III (Figure 6).

Starting from an idle condition, in which no gear is engaged and the two clutches 6 are open (i.e., the engine shaft 3 is disconnected from both of the primary shafts 5), the pin 21 is found in the intermediate position between the two coupling slits 22 illustrated in Figure 2. To engage the first gear I, it is necessary to rotate the external fork 11a (the consequent movement of the pin 21 is illustrated schematically in Figure 4). Consequently, the gear actuator 14 displaces the control shaft 13 axially so as to bring the pin 21 to insert into the coupling slit 22a. Once the pin 21 of the control shaft 13 is fitted within the coupling slit 22a, the control shaft 13 is angularly fixed with respect to the sleeve 18a. In this position, the finger 12a carried by the sleeve 18a is aligned with the internal fork 11a. Consequently, the gear actuator 14 axially displaces the control shaft 13 to push the sleeve 18a so that it bears upon the external end-of-travel element so compressing the spring 19a in order to align the finger 12a with the external fork 11a.

At this point, the gear actuator 14 rotates the control shaft 13 about the longitudinal axis 15 so as to rotate the sleeve 18a, and hence the finger 12a fixed with respect to the sleeve 18a and the external fork 11a pushed by the finger 12a, in the direction necessary for engaging the first gear I. If it had been necessary to engage the third gear III, then the gear actuator 14 would have rotated the sleeve 18a in the opposite direction. As has been said previously, in rotating the sleeve 18a, the gear actuator 14 must overcome the retention torque generated by the retention device 23a.

Once the first gear I is engaged in the way described above, the clutch 6a can be closed for transmitting the motion from the engine shaft 3 to the drive wheels (not illustrated) with the transmission ratio of the first gear I. In addition, once the first gear I has been engaged in the way described above, the gear actuator 14 acts for engaging also the second gear II rotating the internal fork 11b (the consequent movement of the pin 21 is illustrated schematically in Figure 5).

In order to engage the second gear II, the gear actuator 14 displaces the control shaft 13 axially without performing any rotation so as to bring the pin 21 to be released from the coupling slit 22a. This operation does not entail disengagement of the first gear I thanks to the retention torque exerted by the retention device 23a, which prevents the sleeve 18a from performing rotations except under the control of the gear actuator 14. Once the pin 21 has been disengaged from the coupling slit 22a, the gear actuator 14 rotates the control shaft 13 for aligning the pin 21 to the coupling slit 22b and then impresses on the control shaft 13 a new axial displacement so as to bring the pin 21 to insert within the coupling slit 22b. Once the pin 21 of the control shaft 13 is fitted within the coupling slit 22b, the control shaft 13 is angularly fixed with respect to the sleeve 18b. In addition, in this position, the finger 12b carried by the sleeve 18b is aligned with the internal fork 11b that controls the internal synchronizer 10. At this point, the gear actuator 14 rotates the control shaft 13 about the longitudinal axis 15 for rotating the sleeve 18b, hence the finger 12b fixed with respect to the sleeve 18b and the internal fork 11b pushed by the finger 12b, in the direction necessary for engaging the second gear II. If it had been necessary to engage the fourth gear IV, then the gear actuator 14 would have rotated the sleeve 18b in the opposite direction. As mentioned previously, in rotating the sleeve 18b, the gear actuator 14 must overcome the retention torque generated by the retention device 23b.

Once the second gear II has been engaged in the way described above, the clutch 6b can be closed, and simultaneously the clutch 6a must be opened for transmitting the motion from the engine shaft 3 to the drive wheels (not illustrated) with the transmission ratio of the second gear II. In addition, once the second gear II has been engaged in the way described above, the gear actuator 14 acts for disengaging the first gear I and then engaging the third gear III by rotating the external fork 11a (the consequent movement of the pin 21 is illustrated schematically in Figure 6).

For disengaging the first gear I and then engaging the third gear III, the gear actuator 14 axially displaces the control shaft 13 without performing any rotation so as to bring the pin 21 to be released from the coupling slit 22b and then inserted in the coupling slit 22a. This operation does not entail disengagement of the second gear II thanks to the retention torque exerted by the retention device 23b, which prevents the sleeve 18b from performing any rotation except under the thrust of the gear actuator 14. Once the pin 21 of the control shaft 13 is fitted within the coupling slit 22a, the control shaft 13 is angularly fixed with respect to the sleeve 18a. In addition, in this position, the finger 12a carried by the sleeve 18a is aligned with the external fork 11a that controls the external synchronizer 10a. At this point, the gear actuator 14 rotates the control shaft 13 about the longitudinal axis 15 for rotating the sleeve 18a, hence the finger 12a fixed with respect to the sleeve 18a and the external fork 11a pushed by the finger 12a, in the direction necessary for disengaging the first gear I (which is not involved in the transmission of the torque in so far as the clutch 6a is open) and hence for engaging the third gear III. As mentioned previously, in rotating the sleeve 18a, the gear actuator 14 must overcome the retention torque generated by the retention device 23a.

Once the third gear III has been engaged in the way described above, the clutch 6a can be closed, and simultaneously the clutch 6b must be opened for transmitting the motion from the engine shaft 3 to the drive wheels (not illustrated) with the transmission ratio of the third gear III.

The double-clutch gearchange 4 described above presents numerous advantages in so far as it is simple, inexpensive and compact, and requires the use of just one gear actuator 14 that is able to actuate all the forks 11 in an efficient and effective way.

## Claims

1. A double-clutch gearchange (4) comprising:
two primary shafts (5);
a secondary shaft (7);
a plurality of pairs of gear wheels (8, 9), each of which couples mechanically the primary shaft (5) to the secondary shaft (7), defines a respective gear speed and comprises a primary gear wheel (8) mounted on the primary shaft (5) and a secondary gear wheel (9) that is mounted on the secondary shaft (7) and meshes permanently with the primary gear wheel (8);
a plurality of synchronizers (10), each of which is mounted coaxial to a shaft (5; 7) between two gear wheels (8; 9) of two pairs of gears and is designed to be actuated for engaging alternatively the two gear wheels (8; 9) to the shaft (5; 7);
a plurality of forks (11), which actuate the synchronizers (10) and are divided into two distinct groups, each of which is associated to a respective primary shaft (5);
two fingers (12), each of which is associated to a set of forks (11) for actuating all and exclusively the forks (11) of the set of forks (11);
a single control shaft (13) mounted so that it can turn about a longitudinal axis (15) and axially slidable along the longitudinal axis (15); and
a single gear actuator (14) connected to the control shaft (13) for rotating the control shaft (13) about the longitudinal axis (15) and for displacing the control shaft (13) axially along the longitudinal axis (15);
the double-clutch gearchange (4) being **characterized in that** it comprises:
two sleeves (18), each of which supports a respective finger (12) are fitted idle about the control shaft (13) so as to be able to rotate and translate freely with respect to the control shaft (13) and are able to translate along the longitudinal axis (15) ;
a coupling system (21, 22), which is designed to render the control shaft (13) alternatively angularly fixed with respect to the sleeves (18) ; and
two retention devices (23), each of which is designed to maintain a respective sleeve (18) in the current angular position with a constant and predetermined retention torque.

2. The double-clutch gearchange (4) according to Claim 1, wherein the coupling system comprises:
two coupling slits (22), each of which is made in a respective sleeve (18); and
a pin (21), which is fixed with respect to the control shaft (13), comes radially out from the control shaft (13), and is designed to insert alternatively in each coupling slit (22).

3. The double-clutch gearchange (4) according to Claim 2, wherein the two slits reproduce in negative the shape of the pin (21) and are set facing one another.

4. The double-clutch gearchange (4) according to Claim 2 or Claim 3, wherein the two sleeves (18) are axially separate from one another so as to define between the two sleeves (18) themselves a free area.

5. The double-clutch gearchange (4) according to Claim 4, wherein, when the pin (21) comes to be in the free area comprised between the two sleeves (18), the control shaft (13) is angularly independent of the two sleeves (18) and can hence rotate freely with respect to the two sleeves (18) themselves.

6. The double-clutch gearchange (4) according to any one of Claims 1 to 5 and comprising two springs (19), each of which pushes a respective sleeve (18) towards the other sleeve (18).

7. The double-clutch gearchange (4) according to Claim 6, wherein each spring (19) is set around the respective sleeve (18) and is compressed between a projection of a fixed frame (16) that houses the control shaft (13) and a projection of the sleeve (18).

8. The double-clutch gearchange (4) according to Claim 6 or Claim 7, and comprising for each sleeve (18) an internal end-of-travel element, which limits the displacement of each sleeve (18) in the direction of the other sleeve (18) under the thrust of the spring (19).

9. The double-clutch gearchange (4) according to Claim 8, wherein the two internal end-of-travel elements are defined by one and the same detent (20) fixed with respect to a fixed frame (16) that houses the control shaft (13).

10. The double-clutch gearchange (4) according to Claim 8 or Claim 9, wherein, when each sleeve (18) bears upon the internal end-of-travel element, the respective finger (12) is aligned with an internal fork (11).

11. The double-clutch gearchange (4) according to any one of Claims 1 to 10 and comprising for each sleeve (18) an external end-of-travel element, which limits the displacement of each sleeve (18) as it moves away from the other sleeve (18).

12. The double-clutch gearchange (4) according to Claim 11, wherein each external end-of-travel element is defined by a body of a bearing (17) that is carried by a fixed frame (16) that houses the control shaft (13) and supports the control shaft (13) in a rotatable and slidable way.

13. The double-clutch gearchange (4) according to Claim 11 or Claim 12, wherein, when each sleeve (18) bears upon the external end-of-travel element, the respective finger (12) is aligned with an external fork (11).

## Patentansprüche

1. Doppelkupplungsgetriebeschaltung (4) mit:
zwei primären Wellen (5);
einer sekundären Welle (7);
einer Vielzahl von Zahnradpaaren (8, 9), von denen jedes die primäre Welle (5) mechanisch mit der sekundären Welle (7) verbindet, eine entsprechende Zahnraddrehzahl definiert und ein primäres Zahnrad (8), das an der primären Welle (5) angebracht ist, und ein sekundäres Zahnrad (9), das an der sekundären Welle (7) angebracht und in ständigem Eingriff mit dem primären Zahnrad (8) ist, aufweist;
einer Vielzahl von Synchronringen (10), von denen jeder koaxial auf einer Welle (5; 7) zwischen zwei Zahnrädern (8; 9) von zwei Zahnradpaaren angebracht und dazu ausgelegt ist, betätigt zu werden, um die zwei Zahnräder (8; 9) wahlweise mit der Welle (5; 7) in Eingriff zu bringen;
einer Vielzahl von Gabeln (11), welche die Synchronringe (10) betätigen und in zwei unterschiedliche Gruppen unterteilt werden, von denen jede mit einer entsprechenden primären Welle (5) verbunden ist;
zwei Fingern (12), von denen jeder mit einer Gruppe von Gabeln (11) zum Betätigen aller und ausschließlich der Gabeln (11) der Gruppe der Gabeln (11) verbunden ist;
einer einzelnen Steuerwelle (13), die so angebracht ist, dass sie um eine Längsachse (15) drehen kann und entlang der Längsachse (15) axial gleitfähig ist; und
einem einzelnen Zahnradstellantrieb (14), der mit der Steuerwelle (13) verbunden ist, um die Steuerwelle (13) um die Längsachse (15) zu drehen und die Steuerwelle (13) axial entlang der Längsachse (15) zu verschieben;
wobei die Doppelkupplungsgetriebeschaltung (4)
**dadurch gekennzeichnet ist, dass** sie aufweist:
zwei Muffen (18), von denen jede einen entsprechenden Finger (12) trägt, in der Weise locker um die Steuerwelle (13) angebracht, dass sie in Bezug auf die Steuerwelle (13) frei drehen und verschoben werden können und entlang der Längsachse (15) verschoben werden können;
ein Kupplungssystem (21, 22), das dazu ausgelegt ist, die Steuerwelle (13) wahlweise im Winkel zu den Muffen (18) zu fixieren; und
zwei Haltevorrichtungen (23), von denen jede dazu ausgelegt ist, eine entsprechende Muffe (18) mit einem konstanten, zuvor bestimmten Haltemoment in der augenblicklichen Winkelposition zu halten.

2. Doppelkupplungsgetriebeschaltung (4) gemäß Anspruch 1, bei der das Kupplungssystem aufweist:
zwei Kupplungsschlitze (22), von denen jeder in einer entsprechenden Muffe (18) hergestellt ist; und
einen Stift (21), der in Bezug auf die Steuerwelle (13) fixiert ist, die Steuerwelle (13) radial verlässt und dazu ausgelegt ist, wahlweise in jeden Kupplungsschlitz (22) einzutreten.

3. Doppelkupplungsgetriebeschaltung (4) gemäß Anspruch 2, bei der die zwei Schlitze die Form des Stifts (21) negativ wiedergeben und einander zugewandt angeordnet sind.

4. Doppelkupplungsgetriebeschaltung (4) gemäß Anspruch 2 oder 3, bei der die zwei Muffen (18) axial voneinander getrennt sind, sodass sie zwischen den zwei Muffen (18) einen freien Bereich definieren.

5. Doppelkupplungsgetriebeschaltung (4) gemäß Anspruch 4, bei der dann, wenn der Stift (21) in den zwischen den zwei Muffen (18) gebildeten freien Bereich gelangt, die Steuerwelle (13) hinsichtlich des Winkels von den zwei Muffen (18) unabhängig ist und deshalb in Bezug auf die zwei Muffen (18) frei drehen kann.

6. Doppelkupplungsgetriebeschaltung (4) gemäß einem der Ansprüche 1 bis 5, mit zwei Federn (19), von denen jede eine entsprechende Muffe (18) in Richtung der anderen Muffe (18) schiebt.

7. Doppelkupplungsgetriebeschaltung (4) gemäß Anspruch 6, bei der jede Feder (19) um die entsprechende Muffe (18) gelegt ist und zwischen einem Vorsprung eines festen Rahmens (16), der die Steuerwelle (13) aufnimmt, und einem Vorsprung der Muffe (18) zusammengedrückt wird.

8. Doppelkupplungsgetriebeschaltung (4) gemäß Anspruch 6 oder 7, mit einem inneren Anschlagelement für jede Muffe (18), das die Verschiebung jeder Muffe (18) in die Richtung der anderen Muffe (18) unter dem Druck der Feder (19) begrenzt.

9. Doppelkupplungsgetriebeschaltung (4) gemäß Anspruch 8, bei der die zwei inneren Anschlagelemente von ein und derselben Arretierung (20) definiert werden, die in Bezug auf einen festen Rahmen (16), der die Steuerwelle (13) aufnimmt, fixiert ist.

10. Doppelkupplungsgetriebeschaltung (4) gemäß Anspruch 8 oder 9, bei der dann, wenn jede Muffe (18) an dem inneren Anschlagelement anliegt, der entsprechende Finger (12) nach einer inneren Gabel (11) ausgerichtet ist.

11. Doppelkupplungsgetriebeschaltung (4) gemäß einem der Ansprüche 1 bis 10, mit einem äußeren Anschlagelement für jede Muffe (18), das die Verschiebung jeder Muffe (18) während ihrer Bewegung fort von der anderen Muffe (18) begrenzt.

12. Doppelkupplungsgetriebeschaltung (4) gemäß Anspruch 11, bei der jedes äußere Anschlagelement durch einen Körper eines Lagers (17) definiert wird, das von einem festen Rahmen (16), der die Steuerwelle (13) aufnimmt, getragen wird und die Steuerwelle (13) drehbar und gleitfähig stützt.

13. Doppelkupplungsgetriebeschaltung (4) gemäß Anspruch 11 oder 12, bei der dann, wenn jede Muffe (18) an dem äußeren Anschlagelement anliegt, der entsprechende Finger (12) nach einer äußeren Gabel (11) ausgerichtet ist.

## Revendications

1. Changement de vitesses à double embrayage (4), comprenant:
deux arbres primaires (5) ;
un arbre secondaire (7) ;
une pluralité de paires de roues dentées (8, 9), dont chacune couple mécaniquement l'arbre primaire (5) à l'arbre secondaire (7), définit un rapport de vitesse respectif et comprend une roue dentée primaire (8) montée sur l'arbre primaire (5) et une roue dentée secondaire (9) qui est montée sur l'arbre secondaire (7) et qui s'engrène en permanence avec la roue dentée primaire (8) ;
une pluralité de synchroniseurs (10), dont chacun est monté de façon coaxiale à un arbre (5 ; 7) entre deux roues dentées (8 ; 9) de deux paires d'engrenages et est conçu de façon à être actionné pour faire venir en prise en alternance les deux roues dentées (8 ; 9) avec l'arbre (5 ; 7) ;
une pluralité de fourches (11), qui actionnent les synchroniseurs (10) et qui sont divisées en deux groupes distincts, chacune d'entre elle étant associée à un arbre primaire respectif (5) ;
deux doigts (12), chacun d'entre eux étant associé à un jeu de fourches (11) pour actionner toutes les fourches (11) du jeu de fourches (11), et exclusivement celles-ci ;
un arbre de commande unique (13), monté de telle sorte qu'il puisse tourner autour d'un axe longitudinal (15) et qu'il puisse coulisser axialement le long de l'axe longitudinal (15) ; et
un actionneur d'engrenage unique (14) relié à l'arbre de commande (13) de façon à faire tourner l'arbre de commande (13) autour de l'axe longitudinal (15) et à déplacer axialement l'arbre de commande (13) le long de l'axe longitudinal (15) ;
le changement de vitesses à double embrayage (4) étant **caractérisé en ce qu'**il comprend:
deux manchons (18), chacun d'entre eux supportant un doigt respectif (12), qui sont disposés librement autour de l'arbre de commande (13), de façon à pouvoir tourner et effectuer une translation librement par rapport à l'arbre de commande (13), et qui sont susceptibles d'effectuer une translation le long de l'axe longitudinal (15) ;
un système de couplage (21, 22), qui est conçu de façon à rendre l'arbre de commande (13) angulairement fixe en alternance par rapport aux manchons (18) ; et
deux dispositifs de rétention (23), chacun d'entre eux étant conçu de façon à maintenir un manchon respectif (18) dans la position angulaire actuelle avec un couple de rétention constant et prédéterminé.

2. Changement de vitesses à double embrayage (4) selon la revendication 1, dans lequel le système de couplage comprend :
deux fentes de couplage (22), chacune d'entre elles étant réalisée dans un manchon respectif (18) ; et
une broche (21), qui est fixe par rapport à l'arbre de commande (13), qui sort radialement de l'arbre de commande (13), et qui est conçue de façon à s'insérer en alternance dans chaque fente de couplage (22).

3. Changement de vitesses à double embrayage (4) selon la revendication 2, dans lequel les deux fentes reproduisent en négatif la forme de la broche (21) et sont disposées de façon à se faire mutuellement face.

4. Changement de vitesses à double embrayage (4) selon la revendication 2 ou la revendication 3, dans lequel les deux manchons (18) sont axialement séparés l'un de l'autre de façon à définir entre les deux manchons (18) eux-mêmes une zone libre.

5. Changement de vitesses à double embrayage (4) selon la revendication 4, dans lequel, lorsque la broche (21) vient à se trouver dans la zone libre incluse entre les deux manchons (18), l'arbre de commande (13) est angulairement indépendant des deux manchons (18), et peut par conséquent tourner librement par rapport aux deux manchons (18) eux-mêmes.

6. Changement de vitesses à double embrayage (4) selon l'une quelconque des revendications 1 à 5 et comprenant deux ressorts (19), dont chacun pousse un manchon respectif (18) vers l'autre manchon (18).

7. Changement de vitesses à double embrayage (4) selon la revendication 6, dans lequel chaque ressort (19) est disposé autour du manchon respectif (18) et est comprimé entre une saillie d'un bâti fixe (16) qui renferme l'arbre de commande (13) et une saillie du manchon (18).

8. Changement de vitesses à double embrayage (4) selon la revendication 6 ou la revendication 7, et comprenant pour chaque manchon (18) un élément de fin de course intérieur, qui limite le déplacement de chaque manchon (18) dans la direction de l'autre manchon (18) sous la poussée du ressort (19).

9. Changement de vitesses à double embrayage (4) selon la revendication 8, dans lequel les deux éléments de fin de course intérieurs sont définis par une seule et même butée (20) fixe par rapport à un bâti fixe (16) qui renferme l'arbre de commande (13).

10. Changement de vitesses à double embrayage (4) selon la revendication 8 ou la revendication 9, dans lequel, lorsque chaque manchon (18) porte contre l'élément de fin de course intérieur, le doigt respectif (12) est aligné avec une fourche intérieure (11).

11. Changement de vitesses à double embrayage (4) selon l'une quelconque des revendications 1 à 10 et comprenant pour chaque manchon (18) un élément de fin de course extérieur, qui limite le déplacement de chaque manchon (18) lorsqu'il s'éloigne de l'autre manchon (18).

12. Changement de vitesses à double embrayage (4) selon la revendication 11, dans lequel chaque élément de fin de course extérieur est défini par un corps d'un palier (17) qui est porté par un bâti fixe (16) qui renferme l'arbre de commande (13) et supporte l'arbre de commande (13) d'une manière rotative et coulissante.

13. Changement de vitesses à double embrayage (4) selon la revendication 11 ou la revendication 12, dans lequel, lorsque chaque manchon (18) porte contre l'élément de fin de course extérieur, le doigt respectif (12) est aligné avec une fourche extérieure (11).
